# EUROPÄISCHE PATENTSCHRIFT

(11) **EP 1 647 350 B1**
(45) Veröffentlichungstag und Bekanntmachung des Hinweises auf die Patenterteilung: **07.05.2008**
(21) Anmeldenummer: 05022416.1
(22) Anmeldetag: 14.10.2005
(51) Int. Cl.: B23K 26/04, B23K 26/28, B23K 26/10

(54) **Anlage und Verfahren zum Laserschweissen sowie Laserschweissung**
Installation and process for laser welding as well as laser weld
Installation et procédé de soudage laser ainsi que soudure laser

(30) Priorität: 18.10.2004 DE 102004050681
(43) Veröffentlichungstag der Anmeldung: 19.04.2006
(73) Patentinhaber: Babcock Borsig Service GmbH, 46049 Gummersbach (DE)
(72) Erfinder: Blume, Rolf, 37520 Osterode (DE); Steinau, Thomas, 40885 Ratingen (DE); Kuscher, Gerd, Dr.-Ing., 30539 Hannover (DE)
(74) Vertreter: Lüdtke, Frank

(56) Entgegenhaltungen:
- JP-A- 9 052 186
- US-A- 6 084 203
- US-B1- 6 191 379

## Beschreibung

Die Erfindung betrifft eine Anlage und ein Verfahren zum Laserschweißen sowie eine Laserschweißung. So eine Anlage und Verfahren werden in Dokument JP 9 052 186 offenbart, welches als nächstliegender Stand der Technik anzusehen ist.

Die Erfindung ist geeignet zum Laserschweißen von dickwandigen, schwierig schweißgeeigneten Rohrwerkstoffen, zum Orbitalschweißen an abnahmepflichtigen, dickwandigen Rohrwerkstoffen, wie sie in Kernkraftanlagen vorkommen und die aus austenitischen und warmfesten Stählen, beispielsweise P 91, bestehen. In diesen Anlagen müssen dickwandige Rohre aus schwierig schweißgeeigneten Rohrwerkstoffen vor Ort, also unter Baustellenbedingungen, miteinander verschweißt werden. Die Verwendung von industriell hergestellten Standartanlagenteilen für den komplexen Einsatz von vorhandenen Orbitalanlagen für Laserschweißungen waren bis zum bisherigen Zeitpunkt aus folgenden Gründen nicht möglich:
- herkömmliche Düsen für Drähte mit dem Zusatzschweißwerkstoff weisen Abmessungen im cm-Bereich auf, so daß durch den Laserstrahl große Hitze zugeführt werden muß, was eine breite Wärmeeinflußzone (WEZ) zur Folge hat, wodurch ein kritisches Gefüge, zumindest im Bereich der Naht entsteht.
- lange Abkühlzeiten für breite Nähte haben kritische, mechanische Eigenschaften zur Folge, so daß diese Teile insbesondere für dickwandige Rohrwerkstoffe, wie sie in Kernkraftwerkanlagen vorkommen, ungeeignet sind

Das Laserschweißen gewinnt jedoch zunehmend an Bedeutung auch für das Fügen von Stahlwerkstoffen, wobei seine Stärke im Schweißen von solchen Werkstoffen liegt, die mit traditioneller Schweißtechnik nicht oder nur bedingt oder mit sehr erheblichen technologischem Aufwand möglich sind. Besonders sind in den letzten Jahren erfolgreich entwickelte Festkörperlaser mit hoher Leistung bis 4 KW und der Möglichkeit den Laserstrahl über ein Lichtleitfaserkabel im Prinzip räumlich unbegrenzt an jeden Ort zu leiten hat neue Möglichkeiten für den industriellen Einsatz der Laserstrahltechnik geschaffen. Um die Laserstrahltechnik zum Verbinden von Teilen mit einem geringen Öffnungswinkel einzusetzen, besonders wenn diese Teile dickwandig sind und aus schwierig schweißbaren Werkstoffen bestehen, ist die Einwirkzeit des Laserstrahles auf den Grundwerkstoff so zu steuern das eine derart kurze Abkühlzeit die die zu schweißenden Grundstoffe in der Struktur nicht bzw. nur unwesentlich beeinflußt. Damit müssen Möglichkeiten gefunden werden, durch einen gezielte Laserstrahl spezifische Wärmeführung den Temperatur-Zeit-Verlauf so zu steuern, daß die Ausbildung der diffusionsgesteuerten WEZ unkritische, mechanisch-technologische Eigenschaften zur Folge haben, d. h., daß sich der nahtnahe Bereich (WEZ) anders ausbildet als das bei jeder konventionellen Schweißung der Fall ist. Das soll insbesondere bei Rohrschweißungen an dickwandigen Rohren erreicht werden, die im Bereich von Kernkraftwerksbauten eingesetzt werden. Dazu zählen hochlegierte, austenitische Stähle und hochwarmfeste Cr-Stähle (Typ P 91), wobei aufgrund vorgegebener Druck- und Temperaturanforderung an diese Anlage eine absolut sichere Fügetechnik gefordert wird, d. h., die Erfüllung höchster Anforderungen an die Nahtgüte.

In US 6,191,379 B1 wird eine Hybridschweißung beschrieben, bei der zwei Werkstücke durch mehrere Schweißlagen miteinander verbunden sind. Diese Technik ist für problemlos zu schweißende Werkstücke geeignet, nicht aber für schwierig schweißgeeignete Werkstoffe, wie sie beispielsweise in Kernkraftanlagen vorkommen. Die dort verwendeten austenitischen und warmfesten Stähle, beispielsweise P91, erfordern eine aufwendige Vorund Nachbehandlung, das heißt, diese Stähle müssen auf ca. 400 °C vorbehandelt werden, wobei die Schweißung bei 400 °C erfolgt. Danach erfolgt ein langsames Abkühlen bzw. Anlassen.
Um dickwandige, schwierig schweißgeeignete Werkstoffe unter Baustellenbedingungen miteinander zu verbinden, sind derartige Hybridschweißungen ungeeignet, da sich die genannten Vor- und Nachbehandlungen vor Ort nur mit großem Aufwand durchführen lassen.

In US 6,084,203 A ist ein Schweißverfahren und eine Vorrichtung beschrieben, mit dem senkrecht aufgestellte Rohre an ihrer Stirnseite miteinander verbunden werden. Die Verbindung erfolgt ohne Schweißzusatzwerkstoff. Die Schweißanlage wird dabei auf das senkrecht stehende Rohr aufgesetzt, wonach die Rohre miteinander verschweißt werden. Diese Technik, die ohne Schweißzusatz funktioniert, ist für kürzere Rohre geeignet, die senkrecht in einer Werkhalle aufgestellt werden können, nicht aber unter Baustellenbedingungen. Die verwendete CO₂-Laseranlage ist aufgrund ihres Gewichtes nicht als Orbitalanlage zum Schweißen geeignet, wobei die Methode nicht geeignet ist, dickwandige, schwierig schweißgeeignete Rohwerkstoffe miteinander zu verschweißen.

Es ist daher Aufgabe der Erfindung dickwandige, schwierig schweißgeeignete Rohrwerkstoffe, die fest installiert und einen geringen Öffnungswinkel zueinander aufweisen, ohne thermische Vor- und Nachbehandlungen mittels Laserschweißung bei hoher Qualität der Schweißnaht miteinander zu verbinden.

Diese Aufgabe wird durch eine Orbitalstation oder Anlage nach den Merkmalen des ersten Patentanspruches, ein Verfahren zum Laserschweißen von Teilen mit geringem Öffnungswinkel und eine Laserschweißung gelöst.

Unteransprüche geben günstige Ausführungsvarianten wieder.

Die erfindungsgemäße Lösung sieht eine Orbitalstation vor und ein Verfahren zum Laserschweißen vor, bei dem eine Schweißung zum Verbinden von zwei dickwandigen, schwierig schweißgeeigneten Rohrwerkstücken erfolgt, bei der mit oder ohne Zusatzschweißwerkstoff eine Schweißung, vorzugsweise eine Viellagenschweißung vorgenommen wird. Während eine Mehrlagenschweißung aus mehreren Schweißnähten besteht, enthält eine Viellagenschweißung 10-20 und mehr Lagen, die ungleich exakter hergestellt werden müssen. Durch die Viellagenschweißung wird erreicht, daß sehr dünne Nähte in 12 und 20 Lagen zwischen die Werkstücke geschweißt werden, wobei die Werkstücke eine Dicke von 8 bis 30 mm aufweisen können und der Öffnungswinkel zwischen den Werkstücken 2 bis 5 Grad beträgt. Die Viellagenschweißung zwischen zwei Rohrstücken wird dadurch erreicht, daß die Schweißnaht so oft, beginnend an der Wurzellage, im Öffnungswinkel zwischen den Werkstücken um die Werkstücke herumgeführt wird, bis die vorgegebene Nahtanzahl erreicht ist. Dabei können 15 Schweißnähte und mehr zwischen den Werkstücken angeordnet sein, wobei 19 bis 21 Nähte als vorteilhaft angesehen werden. Weiterhin ist es vorteilhaft die Wurzellage ohne zusätzlichen Schweißwerkstoff zu schweißen. Das kann dadurch erreicht werden, daß sich beide Werkstücke im unteren Teil über eine vorgegebene Höhe oder an einem Punkt berühren. Der Öffnungswinkel zwischen den Werkstücken der 2 bis 5 Grad betragen kann sollte Vorteilhafterweise zwischen 4 und 4,5 Grad liegen. Sofern es sich bei den Werkstücken um Rohrwerkstücke handelt die Bestandteil einer Kernkraftanlage sind, wird ihre Wandstärke bis zu 17 mm betragen.

Laserschweißungen der genannten Art mit geringem Wärmeeintrag setzen die Verwendung von Zusatzschweißwerkstoff zur Verbindung der Werkstücke voraus. Das setzt allerdings den punktgenauen Einsatz eines Laserstrahles gegenüber den zu schweißenden Werkstücken und dem Zusatzschweißwerkstoff voraus, sowie eine kleine Haltervorrichtung, beispielsweise eine Düse für den Zusatzwerkstoff. Durch die gezielte laserstrahlspezifische Wärmeführung ist es möglich den Temperaturzeitverlauf so zu steuern, daß die Ausbildung der diffusionsgesteuerten WEZ unkritische mechanisch, technologische Eigenschaften ergibt, d. h. der nahtnahe Bereich bildet sich anders als bei jeder konventionellen Schweißung aus.

Um so wohl den Laserstrahl als auch den Zusatzschweißwerkstoff in Form eines Drahtes genau in die Nahtflanken mit geringem Öffnungswinkel zu fördern, ist es erforderlich, ein absolutes Niveau für die Schweißnaht in der Fuge festzulegen und die Abweichungen von diesem Niveau kontinuierlich sensorisch zu erfassen. Entsprechend dieser Abweichung wird der Arbeitspunkt des Laserstrahles gesteuert, wobei der Draht als Zusatzwerkstoff immer den gleichen Abstand zum Arbeitspunkt des Laserstrahles aufweist.

Unebenheiten auf dem zu schweißenden Werkstück oder dem Rohr kommen beispielsweise dadurch zu Stande, daß die Rohre nicht völlig rund sind, ihre Verbindungsstelle nicht in jedem Punkt eben und gleich weit vom mittleren Niveau entfernt liegt oder aber das eine zur Bearbeitung eingesetzte Orbitalanlage mit ihren Abstandshaltern am Rohr nicht gerade eingespannt ist.

Das vorgeschlagene Laserschweißverfahren erfaßt den voraussichtlichen Arbeitspunkt am zu schweißenden Werkstück auf ein tausendstel Millimeter genau in dem eine fest am Schweißgerät installierte Sensorik den voraussichtlichen Arbeitspunkt am Werkstück mißt und speichert und den Laserstrahl sowie den Schweißdraht, sobald beide den vermessenen Punkt erreicht haben, in die genaue Position bringen so daß der Arbeitspunkt des Laserstrahls genau an der vorgesehenen Stelle wirksam wird. Das Erfassen der auftretenden Abweichung und das Einstellen des Arbeitspunktes erfolgen in vorteilhafter Weise entlang des Öffnungswinkels zwischen beiden Rohrwerkstoffen und nacheinander. Der Abstand zwischen dem kleinsten Fokuspunkt und dem Bereich der Drahtzuführung wird verfahrensbedingt angepaßt (>0 mm). Bei einer Schweißverbindung zwischen zwei Rohrstücken wird eine Viellagenschweißnaht dadurch erreicht, daß die Schweißeinrichtung vielfach um den Umfang der Rohrverbindung geführt wird, so daß nach 10, 20 oder mehrmaligem Umkreisen des Rohres die gewünschte Vielfachnaht entsteht.

Als Schweißeinrichtung zum Laserschweißen der vorgeschlagenen Naht und Durchführung des vorgeschlagenen Verfahrens wurde eine Orbitalanlage entwickelt die mit einem Spanntracktorring auf dem zu schweißenden Rohr fest verbunden ist und sich auf diesem um das Rohr dreht. Das Laserschweißen mit einer Orbitalanlage ist nur unter der Bedingung möglich, daß ein Sensor die Abweichung eines definierten Punktes an dem zu schweißenden Rohr von einem Höhenniveau, insbesondere einem mittleren mißt, eine Rechnereinheit nach den Daten des Sensors den Arbeitspunkt des Laserstrahles vom zu schweißenden Rohr vorgibt und ein Stellmotor der die Bearbeitungsoptik des Laserstrahles zum zu schweißenden Rohr steuert und in einem definierten Abstand zum Arbeitspunkt Haltevorrichtungen, beispielsweise sehr kleine Düsen mit einem Draht von geringem Durchmesser den Zusatzwerkstoff zum Arbeitspunkt führt. Diese Düsen weisen einen Außendurchmesser von 2mm und einen dem Draht angepaßten Innendurchmesser auf und halten der effektiv vorliegenden Temperatur stand, wobei der Zusatzwerkstoff einen Durchmesser von 0,7 bis 0,9 mm aufweist. Weiterhin ist es vorteilhaft die wassergekühlte Begasungseinheit am zu verbindenden Rohr mittels Rollen zu führen welche von einer Feder belastet werden. Damit ist in jeder Position bei der Drehung der Orbitanlage gewährleistet, daß die Düse dicht auf dem Rohr aufliegt wobei der Arbeitspunkt des Laserstrahles bei jeder Umdrehung der Orbitalanlage näher an die Oberfläche des Rohres heranrückt wobei gleiche Nahtqualitäten im Unfang und Lagenaufbau (Nahthöhe) garantiert wird. Die Viellagenschweißnähte besitzen gleichbleibende Eigenschaft, wobei durch die gesteuerte, kurzzeitig wirkende Wärmeeinbringung eine schmale WEZ entsteht, die zu unkritischen mechanischen, technologischen Eigenschaften in der Schweißverbindung führt. Im Folgenden wird die Erfindung an fünf Figuren und einem Ausführungsbeispiel näher erläutert. Die Figuren zeigen:
- Figur 1:: Zwei dickwandige Rohre ohne Schweißnaht
- Figur 2:: Zwei dickwandige Rohre mit einer Viellagenschweißnaht
- Figur 3:: Orbitalschweißanlage zur Verbindung von zwei Rohren
- Figur 4:: Orbitalschweißanlage zur Verbindung von zwei Rohren in Ansicht von Figur 3
- Figur 5:: Orbitalanlage zum Verschweißen von zwei Rohren

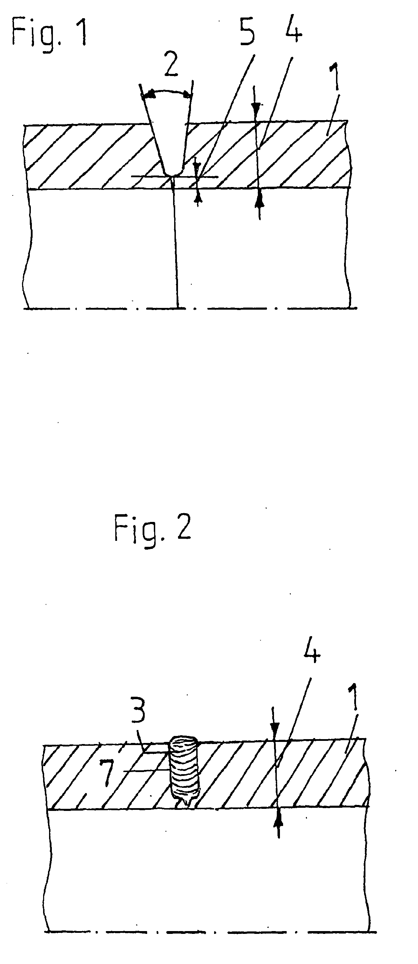

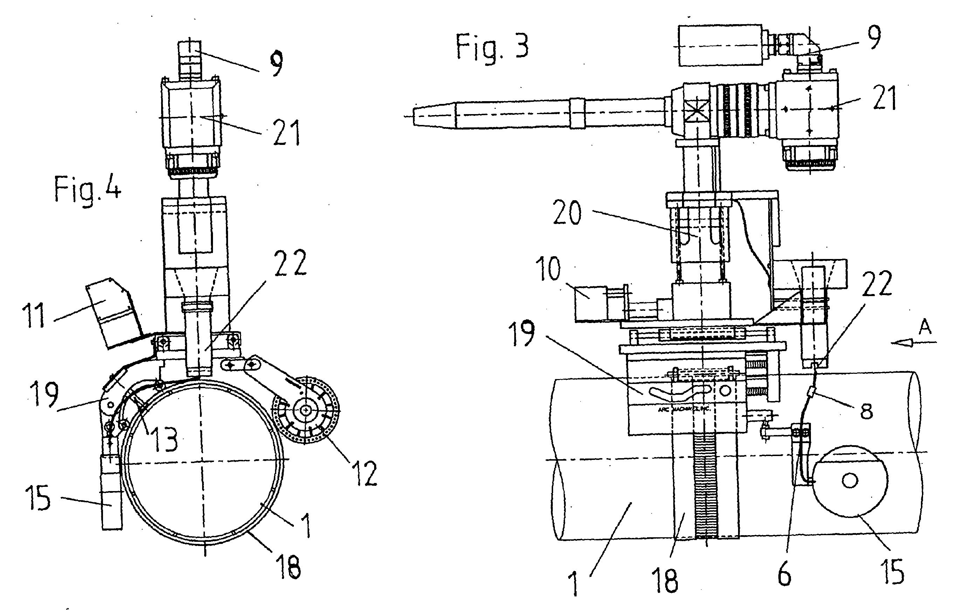

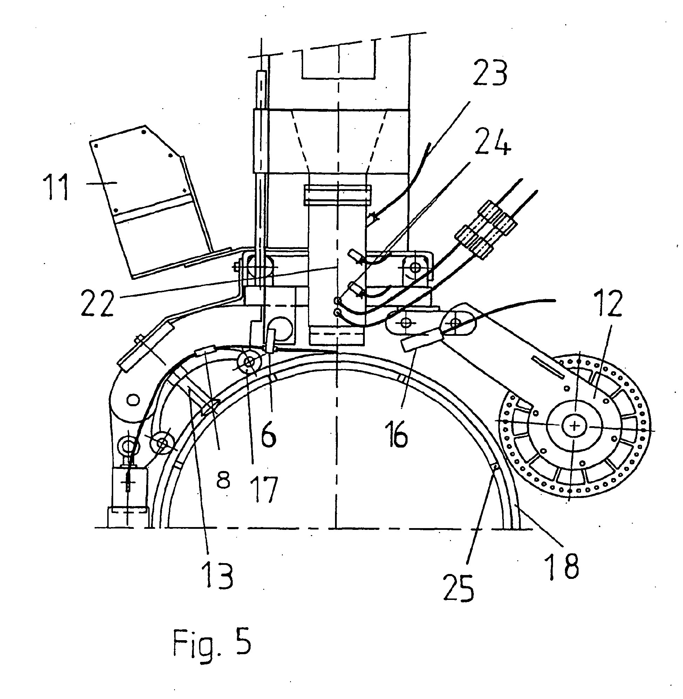

Die Figur 1 zeigt die beiden zu schweißenden dickwandigen Rohre 1 in einem Ausschnitt, wobei diese zueinander einen Öffnungswinkel 2 von 4° aufweisen, der sich nicht über die gesamt Werkstückdicke 4 erstreckt, sondern nur bis zu einer Wurzellage 5, die im vorliegenden Fall 3mm betragen soll, wobei die Werkstückdicke 4, die nicht maßstäblich gezeichnet ist 25mm beträgt. Die beiden Rohre 1 sollen nun durch eine Laserschweißung mit einem Zusatzschweißstoff 6miteinander verbunden werden. Um die Wärmeeinflußzone 7, die in Figur 2 zu sehen ist, möglichst schmal zu halten und eine Schweißnaht 3 mit guten Eigenschaften für die Verbindung zu erreichen, wird zwischen die Werkstücke 1 eine Viellagenschweißnaht 3 angeordnet, die im vorliegenden Fall aus 25 Schweißnähten 3 besteht, die übereinander angeordnet sind und die mittels Laserstrahl und Zusatzschweißwerkstoff 6 in die Naht eingebracht werden, indem die Schweißvorrichtung sich um die Rohre 1 bewegt. Problematisch dabei ist zunächst, daß die Laserschweißvorrichtung, die als Orbitalkopf auf einem Spannring 18 ausgebildet ist auf einige hundertstel Millimeter genau gegenüber der Schweißnaht 3 verfahren muß, d. h. der Orbitalschweißkopf 19 und der Zusatzschweißstoff/Draht 6 müssen immer exakt entsprechend der sich ändernden Schweißnahthöhe eingestellt werden. Die Figur 3 zeigt die Orbitalschweißanlage zur Verbindung von zwei Rohren 1 in einer Prinzipdarstellung. Mit dem Spannring 18 für den Orbitalschweißkopf 19 wird die Vorrichtung an einem der beiden Rohre 1 mit Abstandshalter 25 die in der in Figur 5 zu sehen ist befestigt und dreht sich um die Verzahnung des Orbitalrings 18 in der Weise, daß der Zusatzschweißwerkstoff 6 Schweißnaht 3 für Schweißnaht 3 zwischen beide Rohre geschweißt wird, wobei der Öffnungswinkel 2 nach oben immer weiter durch Schweißnähte 3 geschlossen wird. Abweichungen in der Rundheit des Rohres 1, die sich ständig erhöhende Schweißnaht 3 und eine nicht ganz exakte Einspannung des Rohres 1 in den Spannring 18 machen es erforderlich, vor dem Schweißvorgang, den voraussichtlichen Arbeitspunkt exakt zu vermessen, was mittels Sensor 13 geschieht und danach den Laserstrahl, sowie den zuzuführenden Draht 6 exakt positioniert.

Der mit Figuren 3,4 und 5 gezeigte Orbitallaserschweißkopf besteht aus einer Kamera 9, dem Laserkopf "Würfel" 21 und die Laserzustelleinheit 20, die um zwei Achsen bewegbar ist und durch die gewährleistet wird, daß der Arbeitspunkt und der Zusatzschweißwerkstoff 6 sich genau an der Stelle befinden, an der die Laserschweißung vorgenommen werden muß. Für diese Bewegung ist ein Motor 10 für die Zustelleinheit angeordnet. Weiterhin befindet sich eine Schutzgasdüse 22 an der Vorrichtung. Der Zusatzschweißdraht 6 wird durch ein Richtwerk 8, in Zusammenwirken mit der Drahtzuführeinheit nahe an den Arbeitspunkt herangeführt. Der Draht 6 wird kontinuierlich einer Aufnahme 15, beispielsweise einer Rolle entnommen. Mit dem berührungslose Nahtverfolgungssystem wird sensorisch die geschweißte Naht erfaßt und der voraussichtliche Arbeitspunkt vermessen.

Der Arbeitspunkt des Laserstrahls befindet sich auf der senkrechten Mittellinie zwischen dem Draht 6, dem Rohr 1 und der Schutzgasdüse 22. Vermessen wird der voraussichtliche Arbeitspunkt der wo liegt durch den Sensor 13 oder das berührungslose Nahtverfolgungssystem 11. Von diesem sensorisch erfassenden Teil wird eine Information an die nichtgezeigte Rechenheit gegeben, welche über den Stellmotor 10 das Teil 20 verstellt.

Die Figur 4 zeigt die Ansicht A von Figur 3, wobei gegenüber dem Orbitalschweißkopf 19 der Inkrementalgeber 12 angeordnet ist.

Der Sensor 13 wird mittels Rollen 17 auf dem Spannring 18 geführt und transportiert. Weiterhin zeigt die Figur 5 das Laserlicht 16 und die Zufuhr 23 für das Schutzgas, sowie die Mantelkühlung 24 der Düse.

Durch die gezeigte und beschriebenen Orbitalstation ist es möglich an festinstallierten Einbauten Laserschweißungen mittels Orbitalstation vorzunehmen, wobei Viellageschweißnähte 3 von höchster Qualität herstellbar sind, die auf zehntel oder hunderstel Millimeter genau vermessen und geschweißt werden müssen.

### Liste der verwendeten Bezugszeichen:

- 1.: Werkstück/Rohr
- 2.: Öffnungswinkel
- 3.: Schweißnaht
- 4.: Werkstückdicke
- 5.: Wurzellage
- 6.: Zusatzschweißstoff/Draht
- 7.: Wärmeeinflußzone(WEZ)
- 8.: Feineinrichtung für Schweißzusatzstoff 6 z.B. Düse
- 9.: Kamera
- 10.: Motor für Zustelleinheit
- 11.: berührungsloses Nahtverfolgungssystem
- 12.: Inkrementalgeber
- 13.: Sensor
- 14.: Rechnereinheit
- 15.: Aufnahme für Zusatzwerkstoff (6)/Draht
- 16.: Laserlicht
- 17.: Rollen
- 18.: Spannring für Orbitalstation
- 19.: Orbitalschweißkopf
- 20.: Laserzustelleinheit (2 Achsen)
- 21.: Laserkopf "Würfel" 90°
- 22.: Schutzgasdüse
- 23.: Zufuhr Schutzgas
- 24.: Mantelkühlung der Düse
- 25.: Abstandshalter

## Patentansprüche

1. Orbitalanlage zum Laserschweißen von Rohren (1), die mit einem Spannring (18) und mit dem zu schweißenden Rohr (1) fest verbunden ist und sich auf diesem um das Rohr (1) dreht, **gekennzeichnet durch,**
- einen auf der Schweißnaht vor der Schweißstelle angeordneten Sensor (13), der das Höhenniveau der Schweißnaht der zu schweißenden Rohre (1) mißt,
- einer Rechnereinheit (14) die nach den Daten des Sensors (13) den Arbeitspunkt des Laserstrahles, vom zu schweißenden Rohr (1) steuert und
- eine in Richtung auf den Arbeitspunkt der Schweißung entsprechend der Daten der Recheneinheit (14) verstellbare Laserzustelleinheit (20).

2. Anlage nach Anspruch 1, **gekennzeichnet dadurch, daß** in einem definierten Abstand zum Arbeitspunkt eine Aufnahme für einen Zusatzstoff (6) angeordnet ist, die eine Düse (15) mit einem geringen Außendurchmesser darstellt.

3. Anlage nach den Ansprüchen 1 und 2 **dadurch gekennzeichnet, daß** der Innendurchmesser der Düse an den Zusatzwerkstoff (6) angepaßt ist, der 0,7-0,9 mm beträgt und der Außendurchmesser ungefähr 2 mm.

4. Anlage nach dem Anspruch 1 bis 3 **dadurch gekennzeichnet ist, daß** die wassergekühlte Düse des Zusatzwerkstoffes auf dem Rohr (1) mittels Rollen geführt und von einer Feder belastet wird.

5. Verfahren zum Laserschweißen von, dickwandigen, schwierig schweißgeeigneten Rohrwerkstoffen mit geringem Öffnungswinkel **dadurch gekennzeichnet, daß**
- ein absolutes Höhenniveau für die Schweißnaht in der Fuge festgelegt,
- die von diesem Niveau auftretenden Abweichungen kontinuierlich gemessen werden und
- der Arbeitspunkt des Laserstrahles oder/und der Abstand des Drahtes oder Zusatzwerkstoffes (6) entsprechend der gemessenen Abweichung während des Laserschweißvorganges kontinuierlich eingestellt werden.

6. Verfahren nach Anspruch 5 **dadurch gekennzeichnet, daß** das Erfassen der auftretenden Abweichung am zu schweißenden Werkstück (1) und das Einstellen des Arbeitspunktes des Laserstrahles sowie des Abstandes und des Schweißzusatzwerkstoffes (6) entlang des Öffnungswinkels (2) nacheinander erfolgen.

7. Verfahren nach den Ansprüchen 5 und 6 **dadurch gekennzeichnet, daß** der Abstand (12) zwischen Arbeitspunkt (10) und dem Zusatzwerkstoff (6) variabel angepaßt ist.

8. Verfahren nach den Ansprüchen 5 bis 7 mittels einer Orbitalanlage nach den Ansprüchen 1 bis 4, **dadurch gekennzeichnet, daß** die Schweißnaht (3) durch ein kontinuierliches, mehrfaches Schweißen über den Umfang der Rohre (1) in der Weise erreicht wird, daß die Schweißeinrichtung mehrfach um den Umfang der Rohre (1) geführt wird.

9. Laserschweißung zum Verbinden von Stirnseiten von zwei dickwandigen schwierig schweißgeeigneten Rohrwerkstücken miteinander mittels Zusatzschweißwerkstoff, hergestellt nach einem Verfahren nach Anspruch 5, **gekennzeichnet durch** eine Viellagenschweißung mit 15 bis 25 übereinanderliegenden Nähten (3) wobei die miteinander verschweißten Rohre (1) eine Dicke (4) bis 60 mm und einen Öffnungswinkel (2) von 2 bis 5 Grad aufweisen.

10. Laserschweißung nach Anspruch 9 **dadurch gekennzeichnet, daß** die Wurzellage (5) ohne Zusatzschweißstoff (6) geschweißt ist.

11. Laserschweißung nach den Ansprüchen 9 und 10 **dadurch gekennzeichnet, daß** der Öffnungswinkel (2) zwischen 4 und 4,5 Grad liegt, die Dicke (4) der Werkstücke 8-30 mm beträgt und die Wurzellage (5) ca. 3 mm beträgt.

## Claims

1. An orbital laser welding system for pipelines (1) that is fixedly connected to a clamping ring (18) and to the pipeline (1) to be welded and that rotates on said ring about said pipeline (1), **characterized by**
- a sensor (13) for measuring the height level of the weld seam of the pipelines (1) to be welded, said sensor being disposed on the weld seam upstream of the weld,
- a computing unit (14) for controlling the working point of the laser beam from the pipeline (1) to be welded according to the sensor (13) data and
- a laser supply unit (20), adjustable in the direction of the working point of welding according to the data of the computing unit (14).

2. The system as set forth in claim 1, **characterized in that** a receptacle for a filler material (6) is spaced a defined distance apart relative to the working point, said receptacle constituting a nozzle (15) with a small outer diameter.

3. The system as set forth in the claims 1 and 2, **characterized in that** the inner diameter of the nozzle is adapted to the filler material (6) which is 0.7 - 0.9 mm and the outer diameter is about 2 mm.

4. The system as set forth in claim 1 through 3, **characterized in that** the water-cooled nozzle of the filler material is guided on the pipeline (1) by means of rolls and is spring-loaded.

5. A method of laser welding thick-walled, difficult-to-weld pipeline materials with a small opening angle, **characterized in that**
- an absolute height level is fixed for the weld seam in the joint,
- the differences from this level are continuously measured and
- the working point of the laser beam or/and the distance of the wire or of the filler material (6) are continuously adjusted during the laser welding process according to the measured difference.

6. The method as set forth in claim 5, **characterized in that** detection of the difference at the workpiece (1) to be welded and adjustment of the working point of the laser beam as well as of the distance and the filler material to be welded (6) along the opening angle (2) occur one after the other.

7. The method as set forth in the claims 5 and 6, **characterized in that** the distance (12) between the working point (10) and the filler material (6) is adapted in a variable manner.

8. The method as set forth in the claims 5 through 7, performed by means of an orbital system as set forth in the claims 1 through 4, **characterized in that** the weld seam (3) is achieved by continuous multiple welding over the perimeter of the pipelines (1) in such a manner that the welding device is guided several times about the perimeter of the pipelines (1).

9. Laser welding for joining together front sides of two thick-walled difficult-to-weld pipeline workpieces using a filler welding material, manufactured according to a method as set forth in claim 5, **characterized by** a multiple-layer welding with 15 to 25 superposed seams (3), the pipelines (1) welded together having a thickness (4) of up to 60 mm and an opening angle (2) of 2 to 5 degrees.

10. Laser welding as set forth in claim 9, **characterized in that** the root layer (5) is welded without welding filler material (6).

11. Laser welding as set forth in claim 9 and 10, **characterized in that** the opening angle (2) ranges between 4 and 4.5 degrees, the thickness (4) of the workpieces is 8-30 mm and the root layer (5) is 3 mm.

## Revendications

1. Machine de soudage orbital au laser de tubes (1), solidarisée de façon fixe à un anneau de serrage (18) et au tube (1) qu'il y a lieu de souder et tournant sur cet anneau autour du tube (1), **caractérisé par**
- un capteur (13) disposé sur le cordon de soudure, devant l'endroit de soudage, ce capteur mesurant la hauteur du cordon de soudure des tubes (1) à souder,
- un ordinateur (14) qui contrôle le point de travail du rayon laser en fonction des données du capteur (13), depuis le tube (1) à souder, et
- une unité d'acheminement (20) du laser ajustable en direction du point de travail du soudage en fonction des données de l'ordinateur (14).

2. Machine selon la revendication 1, **caractérisée en ce qu'**un récipient destiné à contenir un matériau d'apport (6) est disposé à une distance définie par rapport au point de travail, ce récipient constituant une tuyère (15) de faible diamètre extérieur.

3. Machine selon les revendications 1 et 2, **caractérisée en ce que** le diamètre intérieur de la tuyère est adapté au matériau d'apport (6) qui est de 0,7 - 0,9 mm et que le diamètre extérieur est d'environ 2 mm.

4. Machine selon la revendication 1 à 3, **caractérisée en ce que** la tuyère du matériau d'apport refroidie à l'eau est guidée sur le tube (1) au moyen de rouleaux et qu'elle est sollicitée par un ressort.

5. Procédé de soudage laser de matériaux de tubes à parois épaisses, difficiles à souder ayant un faible angle d'ouverture, **caractérisé en ce que**
- on fixe un niveau de hauteur absolu pour le cordon de soudure dans le joint,
- on mesure en continu les écarts de niveau par rapport à ce niveau absolu et
- on ajuste en continu le point de travail du rayon laser ou/et la distance du fil ou du matériau d'apport (6) en fonction de l'écart mesuré pendant le soudage au laser.

6. Procédé selon la revendication 5, **caractérisé en ce que** la détection de l'écart sur la pièce à souder (1) et l'ajustement du point de travail du rayon laser ainsi que de la distance et du matériau d'apport (6) le long de l'angle d'ouverture (2) sont réalisés l'un après l'autre.

7. Procédé selon les revendications 5 et 6, **caractérisé en ce que** la distance (12) entre le point de travail (10) et le matériau d'apport (6) est adapté de façon variable.

8. Procédé selon les revendications 5 à 7, moyennant une machine de soudage orbital selon les revendications 1 à 4, **caractérisé en ce que** le cordon de soudure (3) est obtenu par soudage continu en plusieurs passes sur le pourtour des tubes (1) de telle sorte que le dispositif de soudage est passé plusieurs fois sur le pourtour des tubes (1).

9. Soudage laser pour relier ensemble des faces d'extrémité de deux tronçons de tube à paroi épaisse difficiles à souder au moyen d'un matériau d'apport réalisé selon un procédé selon la revendication 5, **caractérisé par** un soudage en plusieurs passes de remplissage avec 15 à 25 cordons de soudure (3) superposés, les tubes (1) soudés ensemble ayant une épaisseur (4) allant jusqu'à 60 mm et un angle d'ouverture (2) compris entre 2 et 5 degrés.

10. Soudage laser selon la revendication 9, **caractérisé en ce que** la passe de racine (5) est soudée sans matériau d'apport (6).

11. Soudage laser selon les revendications 9 et 10, **caractérisé en ce que** l'angle d'ouverture (2) est compris entre 4 et 4,5 degrés, que l'épaisseur (4) des pièces est comprise entre 8 et 30 mm et que la passe de racine (5) est de 3 mm environ.
